# EUROPÄISCHE PATENTSCHRIFT

(11) **EP 1 075 602 B1**
(45) Veröffentlichungstag und Bekanntmachung des Hinweises auf die Patenterteilung: **10.12.2003**
(21) Anmeldenummer: 99920812.7
(22) Anmeldetag: 29.04.1999
(51) Int. Cl.: F15B 13/00, F16K 13/10, F16L 55/10, F15C 5/00

(54) **MIKROVENTILBATTERIE**
MICROVALVE BATTERY
BATTERIE DE MICROCLAPETS

(30) Priorität: 08.05.1998 DE 19820519
(43) Veröffentlichungstag der Anmeldung: 14.02.2001
(73) Patentinhaber: FESTO AG & Co, 73734 Esslingen (DE)
(72) Erfinder: STOLL, Kurt, D-73732 Esslingen (DE); POST, Peter, D-73760 Ostfildern (DE); VOLLMER, Herbert, D-73274 Notzingen (DE); WEINMANN, Michael, D-73655 Plüderhausen (DE)
(74) Vertreter: Abel, Martin, Dipl.-Ing.
(86) Internationale Anmeldenummer: EP9902895
(87) Internationale Veröffentlichungsnummer: WO99058859

(56) Entgegenhaltungen:
- WO-A-90/06470
- WO-A-94/00696
- WO-A-96/28664
- WO-A-99/01688
- US-A- 4 612 959
- US-A- 5 417 235

## Beschreibung

Die Erfindung betrifft eine Mikroventilbatterie.

Durch Mikrostrukturierungsverfahren hergestellte Mikroventile sind als solches bekannt und gehen beispielsweise aus der EP 0 485 739 A1 hervor. Sie verfügen in der Regel über einen Mehrschichtenaufbau und können unter anderem durch Ätzund/oder Abformprozesse hergestellt werden.

Auf Grund der sich ständig erweiternden Anwendungsfelder für die Mikroventiltechnik besteht ein zunehmender Bedarf für die Bereitstellung komplexerer Schaltfunktionen in Abhängigkeit von der zu lösenden Steuerungsaufgabe. Die hierzu an sich erforderliche Verschaltung mehrerer der bekannten Mikroventile ist wegen der geringen Baugröße nicht leicht zu handhaben.

Aus der WO-A-96/28664 geht bereits eine Mikroventilbatterie hervor, die mit einer Mehrzahl von Mikroventilen ausgestattet ist, die so konfiguriert sind, dass sie die Funktion mehrerer Dreiwege-Ventile ausführen können. Eine elektronische Steuereinrichtung versorgt die Mikroventile mit den notwendigen Betätigungssignalen.

Es ist die Aufgabe der vorliegenden Erfindung, aufbauend auf einer Mehrfachanordnung mikromechanischer Ventile mit einfachen Maßnahmen eine bedarfsspezifische steuerungstechnische Verknüpfung zu ermöglichen.

Gelöst wird diese Aufgabe mit einer Mikroventilbatterie, die eine Mehrzahl von zu einer Baueinheit zusammengefassten, durch Mikrostrukturierungsverfahren hergestellten Mikroventile enthält, mit einer elektronischen Steuereinrichtung zur Aktuierung der Mikroventile, die mindestens eine Funktionsvorgabeeinheit zur programmierbaren gruppenweisen funktionellen Verknüpfung der Mikroventile enthält, wobei in der elektronischen Steuereinrichtung aus zugeführten oder in einem internen Steuerprogramm erzeugten Steuersignalen und aus in der Funktionsvorgabeeinheit abgespeicherten zugeordneten Funktionsverknüpfungsparametern ventilspezifische Betätigungssignale für die angesprochenen Mikroventile erzeugt werden, und mit einem an die Mikroventile angeschlossenen Fluidkanalsystem, dessen Fluidkanäle ausgehend von einer standardisiert vorgegebenen Anordnung in Abhängigkeit von der mit der Funktionsvorgabeeinheit vorgegebenen funktionellen Ventilverknüpfung durch Freigeben und/oder Verschließen von Durchgängen individuell verschaltet sind.

Auf diese Weise liegt eine zu einer Baueinheit zusammengefasste Mehrfach- oder Vielfachanordnung von Mikroventilen vor, die sich ausgehend von einer Basisstruktur unter gegenseitiger Abstimmung sowohl ansteuerungstechnisch als auch fluidtechnisch annähernd beliebig zu einer oder mehreren Funktionsgruppen verknüpfen lassen. Durch geeignete Programmierung der Funktionsvorgabeeinheit lassen sich einzelne Ventile zu Funktionsgruppen zusammenfassen, die bei Ansteuerung eine einem bestimmten Funktionsmuster entsprechende Betriebsweise an den Tag legen, so dass mit den einzelnen Funktionsgruppen beispielsweise höherwertige Ventilfunktionen simuliert oder auch Parallelschaltungen zum Zwecke einer Durchflusserhöhung realisiert werden können. Somit lässt sich mit Hilfe der Funktionsvorgabeeinheit die Ventilfunktionalität festlegen dahingehend, dass die innerhalb einer Funktionsgruppe zusammengefassten Mikroventile bei Ansteuerung in geeigneter Weise so zusammenwirken, dass sich diese Ventile funktionell wie ein Ventil der vordefinierten Funktionalität verhalten. Zur Gewährleistung der funktionellen Variabilität der Mikroventilbatterie sind neben den auf der Steuerungsseite vorgesehenen programmiertechnischen Möglichkeiten zusätzliche Möglichkeiten zur flexiblen Verschaltung der mit den Mikroventilen kommunizierenden Fluidkanälen vorgesehen. Letztere umfassen ein an die Mikroventile angeschlossenes Fluidkanalsystem, also eine Vielfachanordnung von Fluidkanälen, wobei ausgehend von einer standardmäßig vorgegebenen Kanalanordnung unter Berücksichtigung der programmiertechnisch auf elektrischem Wege vorgegebenen Funktionalität der zu Gruppen zusammengefassten Mikroventile eine individuelle Verschaltung der Fluidkanäle durch Freigeben und/oder durch Verschließen von Durchgängen zwischen Fluidkanälen möglich ist. Eine derartige programmierbare Vielfachanordnung von Mikroventilen gestattet es, Batch-Fertigungsverfahren der Mikrotechnik kostengünstig einsetzen zu können, indem gleichartige Mikroventilsysteme gefertigt werden, deren Ventilfunktionalität durch gegenseitige Abstimmung der steuerungstechnischen funktionellen Verknüpfung und der fluidkanalseitigen Verschaltung erst vor dem Einsatz durch Programmieren festgelegt wird. Von Seiten der Steuerungstechnik ist die Mikroventilbatterie so ausgelegt, dass sie in der Steuereinrichtung über ein vorzugsweise frei programmierbares internes Steuerprogramm verfügt, das Steuersignale erzeugt, aus welchen in Verbindung mit den zugeordneten, in der Funktionsvorgabeeinheit abgelegten Funktionsverknüpfungsparametern die erforderlichen Betätigungssignale generiert werden, die in entsprechend abgestimmter Weise den zu einer Funktionsgruppe zusammengefassten Mikroventilen zugeführt werden, um die gewünschte Betriebsweise hervorzurufen. Alternativ oder zusätzlich können die Steuersignale auch zugeführt werden, beispielsweise über einen an die Steuereinrichtung angeschlossenen Bus, wobei über einen Bus bei Bedarf auch eine Rückmeldung zu einer übergeordneten Steuervorrichtung erfolgen kann.

Zwar offenbaren beispielsweise die DE 42 21 089 A1, die DE 40 03 619 A1, die US 5,322,258, die US 5,417,235, die US 5,640,995 oder die DE 36 21 331 A1 Mehrfachanordnungen von Mikroventilen, die teilweise auch variabel elektrisch ansteuerbar sind. Eine variable fluidtechnische Verschaltung auf der Basis der steuerungstechnischen Vorgaben wird allerdings nicht beschrieben.

vorteilhafte Weiterbildungen der Erfindung gehen aus den Unteransprüchen hervor.

Aus herstellungstechnischer Sicht besonders günstig ist eine Bauform, bei der die in einer Mikroventilbatterie zusammengefassten Mikroventile alle vom gleichen Typ sind, beispielsweise vom Typ 2/2- oder 3/2-Schaltventil. Allerdings wäre es durchaus denkbar, pro Mikroventilbatterie gleichzeitig Mikroventile unterschiedlichen Typs vorzusehen.

Die Programmierung der Funktionsvorgabeeinheit(en) kann zweckmäßigerweise über einen mit der Steuereinrichtung der Mikroventilbatterie kommunizierenden Bus durchgeführt werden. Auch eine drahtlose ferngesteuerte Programmierung wäre möglich.

Vorzugsweise umfasst die Mikroventilbatterie einen Schichtkörper, der aus mehreren aufeinanderliegenden und fest zusammengefügten Schichtelementen besteht und in dessen Innerem die Mikroventile wie auch das Fluidkanalsystem ausgebildet sind, deren Herstellung zweckmäßigerweise durch vor dem Zusammenfügen erfolgendes mikromechanisches Prozessieren der einzelnen Schichtelemente erfolgt.

Das zum Verschalten der Fluidkanäle erfolgende Freigeben und/oder Verschließen von Durchgängen kann beispielsweise durch Einsatz einer geeigneten separaten Verschaltungseinrichtung erfolgen. Hier könnte man sich eine Art Nadelkissen vorstellen, das mit Nadeln einer der gewünschten Verschaltung entsprechenden Verteilung ausgestattet ist, die in einen das Fluidkanalsystem enthaltenden Grundkörper eingedrückt werden und dort Durchgänge freimachen. Bei weiteren vorteilhaften Ausgestaltungen ist das Fluidkanalsystem an vorgegebenen Stellen mit Absperrmitteln versehen, deren Betätigung an der betreffenden Stelle eine Freigabe oder einen Verschluss eines Durchganges zwischen Fluidkanälen hervorruft. Diese Absperrmittel könnten einfache, zum Beispiel pfropfenähnliche Trennwände innerhalb des Fluidkanalsystems sein, die nach Bedarf thermisch entferrt werden. Weiterhin könnten hier mikromechanische Schaltventile als Absperrmittel zum Einsatz kommen, die je nach Schaltstellung einen Durchgang freigeben oder verschließen und in der jeweiligen Schaltstellung zum Beispiel mechanisch arretiert werden können. Denkbar wären insbesondere auch Ventile, deren Funktionsprinzip auf Piezoelektrik, Magnetostriktion oder Memorymetall-Eigenschaften basiert.

Von Vorteil ist, wenn die fluidtechnische Verschaltung der Fluidkanäle reversibel ist, so dass ein und dieselbe Ventilbatterie bei Änderung der Einsatzbedingungen hinsichtlich ihrer Funktionalitätsprogrammierung leicht geändert werden kann. Hier wäre insbesondere auch eine ferngesteuerte Betätigung, insbesondere unter Einsatz drahtloser Signalübertragungsmittel, möglich.

Nachfolgend wird die Erfindung anhand der beiliegenden Zeichnung näher erläutert. In dieser zeigen:
- Fig. 1: eine erste Bauform der erfindungsgemäßen Mikroventilbatterie in Draufsicht in schematischer Darstellung, wobei die Fluidkanäle des Fluidkanalsystems in verdickten Linien dargestellt sind, und zwar in standardisierter Anordnung ohne vornahme individueller Kanalverschaltungen,
- Fig. 2: den in Fig. 1 strichpunktiert umrahmten Ausschnitt II der Mikroventilbatterie in vergrößerter Darstellung, wobei beispielhaft eine Möglichkeit einer f luidischen Verschaltung des Fluidkanalsystems gezeigt ist und in verdickten Linien die durch die Verschaltung eröffneten Strömungswege markiert sind,
- Fig. 3: in Schnittdarstellung den in Fig. 2 strichpunktiert markierten Ausschnitt III in vergrößerter Darstellung und
- Fig. 4: einen Querschnitt durch die Mikroventilbatterie gemäß Schnittlinie IV-IV aus Fig. 2, wobei allerdings zur Vereinfachung die relevanten Fluidkanäle in einer gemeinsamen Schnittlinie liegend gezeigt sind.

Sämtliche Abbildungen in der Zeichnung sind nicht maßstabsgetreu, dies gilt auch für die Proportionen zwischen den einzelnen Bestandteilen.

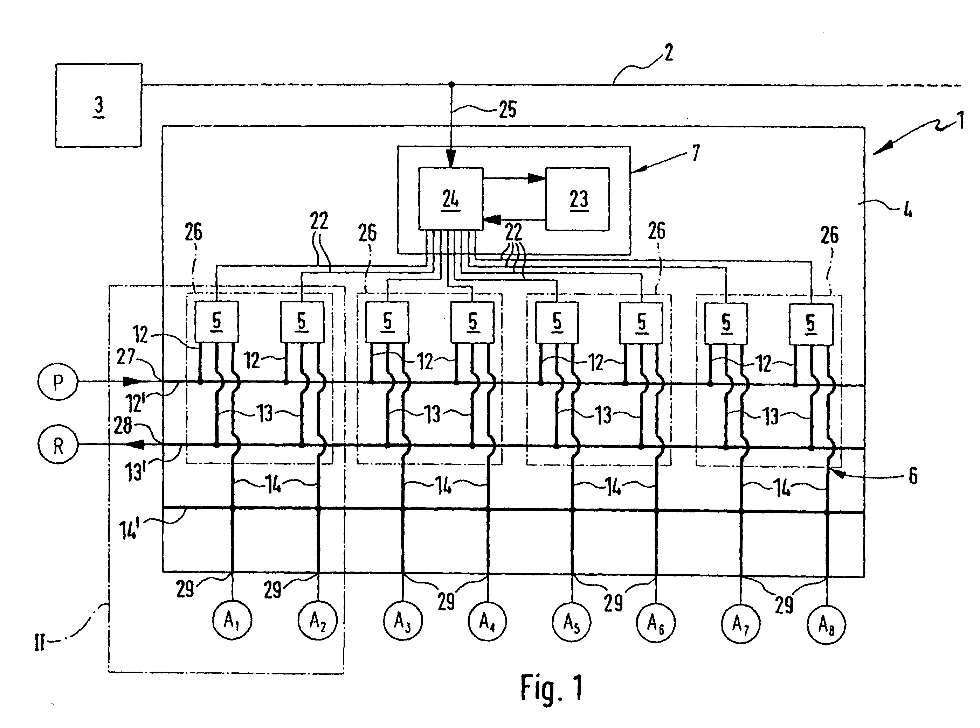

Die Fig. 1 zeigt eine Mikroventilbatterie 1, die über einen beim Ausführungsbeispiel in serieller Übertragungsart ausgeführten Bus 2 an eine separate externe Steuervorrichtung 3 angeschlossen ist. An den Bus 2 können noch weitere Mikroventilbatterien 1 angeschlossen sein.

Die Mikroventilbatterie 1 enthält einen beispielsgemäß blockartigen Grundkörper 4. Dieser ist mit einer Vielzahl von Mikroventilen 5 und einem in seiner Gesamtheit mit Bezugsziffer 6 bezeichneten Fluidkanalsystem ausgestattet sowie mit einer elektronischen Steuereinrichtung 7 bestückt.

Die elektronische Steuereinrichtung 7 dient zur Aktuierung, also zur Betätigung der einzelnen Mikroventile 5, die ihrerseits in Abhängigkeit von der gewählten Betätigung in der Lage sind, Fluidströme zu steuern, die in dem Fluidkanalsystem 6 fließen können. Ein bevorzugter Einsatz der Mikroventilbatterie 1 liegt auf dem Sektor der Pneumatik, wobei das gesteuert strömende Fluid von Druckluft gebildet ist.

Über den Grundkörper 4 sind die Mikroventile 5 zu einer Baueinheit zusammengefaßt. Sie sind, wie zweckmäßigerweise auch das Fluidkanalsystem 6, durch ein geeignetes Mikrostrukturierungsverfahren hergestellt. Hier bietet sich insbesondere eine Ätztechnik unter Verwendung von Siliciummaterial oder eine Abformtechnik unter Einsatz von Kunststoffmaterial an. Da entsprechende Herstellungsverfahren als solches bekannt sind, erübrigen sich an dieser Stelle nähere Details.

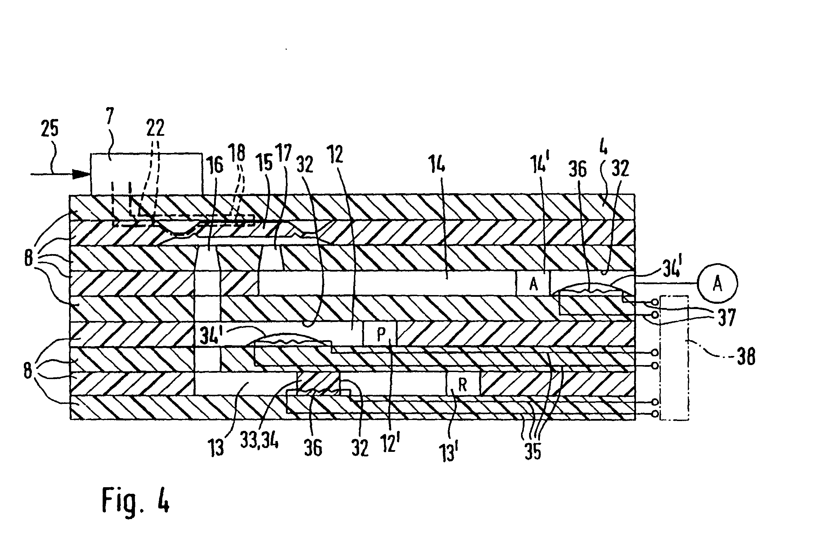

Beim Ausführungsbeispiel ist der Grundkörper 4 als Schichtkörper ausgeführt, was durch Fig. 4 verdeutlicht wird. Er umfaßt eine Mehrzahl flächig aufeinanderliegender Schichtelemente 8, die zum Beispiel durch Verkleben fest miteinander verbunden sind. Beim Ausführungsbeispiel bestehen sie aus Siliciummaterial oder einem gleichwertigen Halbleitermaterial. Die Mikroventile 5 und das Fluidkanalsystem 6 sind im Innern des Grundkörpers 4 vorgesehen. Sie resultieren aus einer geeigneten mikromechanischen Strukturierung der Schichtelemente 8 vor ihrem Zusammenfügen. Einzelne Fluidkanäle des Fluidkanalsystems 6 sind durch Bezugsziffern 12, 13 und 14 angedeutet.

Aus Gründen der übersichtlichkeit sind in der Schnittdarstellung der Fig. 4 das dort gezeigte Mikroventil 5 und die mit ihm kommunizierenden Fluidkanäle 12, 13, 14 in unterschiedlichen Schichtebenen dargestellt. Daraus resultiert eine entsprechend große Anzahl von Schichtelementen 8. In der praktischen Ausführung läßt sich die Anzahl der Schichtelemente 8 dadurch beträchtlich reduzieren, daß die Fluidkanäle 12, 13, 14 mit zueinander versetztem Verlauf teils in gleichen Schichtebenen angeordnet sind.

Insgesamt enthält das Fluidkanalsystem 6 beim Ausführungsbeispiel drei Kanalarten, und zwar Speisekanäle 12, Entlüftungskanäle und Arbeitskanäle 14. Diese Fluidkanäle sind in einer standardisierten Anordnung vorgegeben, wie sie exemplarisch in Fig. 1 erscheint. Diese standardisierte Anordnung repräsentiert eine gewisse Verteilung und auch fluidische Verknüpfung der einzelnen Fluidkanäle 12, 13, 14.

Die in der Mikroventilbatterie 1 enthaltenen Mikroventile 5 sind zweckmäßigerweise durchgehend gleichen Typs. Beim Ausführungsbeispiel handelt es sich um 2/2-Schaltventile, die jeweils über ein Ventilglied 15 verfügen, das zwischen einer in Fig. 4 gezeigten Offenstellung und einer nicht näher dargestellten Schließstellung umschaltbar ist. In der Offenstellung ermöglicht es eine fluidische Verbindung zwischen zwei Öffnungen 16, 17, während es in der Schließstellung diese fluidische Verbindung unterbricht.

Der prinzipielle mechanische Aufbau der Mikroventile 5 kann dem in der EP 0 485 739 A1 beschriebenen entsprechen, auf die wegen weiterer Einzelheiten verwiesen wird. Die Mikroventile 5 des Ausführungsbeispiels sind in der Bauform "normaly closed" ("normalerweise geschlossen") ausgeführt und können durch Anlegen einer elektrischen Spannung an sich gegenüberliegende Elektroden 18 durch elektrostatische Kräfte in die Offenstellung umgeschaltet werden. Die hierzu erforderlichen Betätigungssignale werden über geeignete elektrische Leiter 22 von der ebenfalls am Grundkörper 4 angeordneten elektronischen Steuereinrichtung 7 übermittelt.

Anstelle der Mikroventile mit 2/2-Schaltprinzip wären prinzipiell auch andere Ventiltypen denkbar, beispielsweise 3/2-Schaltventile. Auch wäre es möglich, ein und dieselbe Mikroventilbatterie 1 gleichzeitig mit unterschiedlichen Mikroventiltypen auszustatten. Es hat sich jedoch erwiesen, daß auf Basis einer durchgehenden 2/2-Ventilbestückung eine bestmögliche Funktionalität verbunden mit einfacher Fertigungstechnologie realisiert werden kann.

Die spezifisch der Mikroventilbatterie 1 zugeordnete und vorzugsweise als Baueinheit mit dieser ausgeführte elektronische Steuereinrichtung 7 verfügt über eine Funktionsvorgabeeinheit 23 und eine Signalübermittlungseinheit 24. Diese beiden Einheiten sind beim Ausführungsbeispiel getrennt ausgeführt, könnten aber auch eine integrierte Bauform besitzen. Die Signalübermittlungseinheit 24 kommuniziert über den Bus 2 mit der externen Steuervorrichtung 3 und empfängt von dieser gemäß Pfeil 25 die zur Ansteuerung der Mikrovenile 5 erforderlichen Steuersignale. Bei Bedarf kann über den Bus 2 auch eine Rückführung von Rückmeldesignalen erfolgen, die beispielsweise eine erfolgte Aktuierung bestätigen.

Des weiteren kommuniziert die Signalübermittlungseinheit 24 über die elektrischen Leiter 22 mit jedem einzelnen der Mikroventile 5. über diese elektrischen Leiter 22 werden den Mikroventilen 5 individuell ihnen zugedachte elektrische Betätigungssignale übermittelt. Beim Ausführungsbeispiel wird während der Dauer eines anstehenden Betätigungssignals das ansonsten die Schließstellung einnehmende Ventilglied 15 des betreffenden Mikroventils 5 in der Offenstellung gehalten.

Die Signalübermittlungseinheit 24 steht des weiteren in Datenaustausch mit der Funktionvorgabeeinheit 23. In letzterer sind Funktionsverknüpfungsparameter abgespeichert, die zur gruppenweisen funktionellen Verknüpfung der Mikroventile 5 dienen. Es lassen sich somit Mikroventile beliebiger Anzahl zu einer im Grunde ebenfalls beliebigen Anzahl von Funktionsgruppen zusammenfassen, wobei die Ventile innerhalb einer jeweiligen Funktionsgruppe ein aufeinander abgestimmtes Betriebsverhalten haben, das durch die Funktionsverknüpfungsparameter bestimmt ist.

Die Mikroventilbatterie des Ausführungsbeispiels verfügt über insgesamt acht Mikroventile, die paarweise zu Funktionsgruppen zusammengefaßt sind, so daß insgesamt vier Funktionsgruppen 26 vorliegen, die in Fig. 1 durch strichpunktierte Umrahmungen kenntlich gemacht worden sind.

Es ist nicht erforderlich, daß zu einer Funktionsgruppe gehörende Mikroventile 5 unmittelbar benachbart sind. Eine beliebige Zuordnung unter der vorhandenen Anzahl von Mikroventilen 5 ist möglich. Auch können einzelne Mikroventile 5 gleichzeitig mehreren Funktionsgruppen angehören.

Im Betrieb der Mikroventilbatterie 1 werden nun die gemäß Pfeil 25 eingehenden Steuersignale zuordnungsrichtig mit den abgespeicherten Funktionsverknüpfungsparametern verknüpft, woraus funktionsgruppenspezifische Betätigungssignale erzeugt werden, die dann an die betreffenden Mikroventile 5 übermittelt werden, welche daraufhin mit der gewünschten Funktionalität betätigt werden.

Werden die Steuersignale 25 als serielle Signale zugeführt, enthält die Signalübermittlungseinheit 24 einen geeigneten Busknoten, der in der Lage ist, die die Mikroventilbatterie betreffenden Steuersignale auszulesen.

Es versteht sich, daß die Signalübermittlungseinheit 24 auch selbst mit einem internen Steuerprogramm ausgestattet sein kann, welches autark oder in Abstimmung mit der externen Steuervorrichtung die gewünschten Steuersignale erzeugt.

Zweckmäßigerweise ist die Funktionsvorgabeeinheit 23 reversibel programmierbar, so daß eine anwendungsbezogene flexible Programmierung bzw. Vorgabe der Funktionsverknüpfungsparameter möglich ist. Die Programmierung kann beispielsweise über ein lösbar an die Steuereinrichtung 7 anschließbares Programmiergerät erfolgen, beispielsweise ein PC, möglich wäre aber auch eine drahtlose Programmierung oder eine Programmierung über den Bus 2 und beispielsweise unter Einschaltung der externen Steuervorrichtung.

Beim Ausführungsbeispiel ist sämtlichen Mikroventilen 5, die im übrigen innerhalb des Grundkörpers 4 auch in unterschiedlichen Schichtebenen und unter gegenseitiger Überlappung angeordnet sein können, eine einzige Funktionsvorgabeeinheit 23 gemeinsam zugeordnet. Hier wäre es alternativ denkbar, unter Umständen auch abhängig von der Anzahl der in der Mikroventilbatterie vorgesehenen Mikroventile 5, mehrere Funktionsvorgabeeinheiten vorzusehen, die für die Ansteuerung unterschiedlicher Funktionsgruppen 26 zuständig sind.

Es versteht sich ferner, daß nicht notwendigerweise sämtliche Mikroventile 5 der Mikroventilbatterie 1 zu einer oder mehreren Funktionsgruppen 26 zusammengefaßt sein müssen. Einzelne Ventile könnten auch separat und einzeln mit der ihnen eigenen Funktionscharakteristik betrieben werden.

Die Fluidkanäle 12, 13, 14 des Fluidkanalsystems 6 sind unter Berücksichtigung der durch die Funktionsvorgabeeinheit 23 vorgegebenen funktionellen Verknüpfung der Mikroventile 5 so miteinander verschaltet, daß sich die pro Funktionsgruppe 26 gewünschte Ventilfunktion bezüglich der Fluidstromsteuerung auch tatsächlich einstellt. Es erfolgt also eine Abstimmung der elektronischen Ansteuerungsseite mit der fluidischen Verschaltungsseite unter Berücksichtigung der gewünschten Funktionalität.

Um diese Abstimmung anwendungsspezifisch und sehr flexibel vornehmen zu können, wird als Basis ein Fluidkanalsystem 6 in der schon erwähnten standardisiert vorgegebenen Anordnung zugrundegelegt. Beim Ausführungsbeispiel umfaßt das Fluidkanalsystem 6 eine Mehrzahl von Speisekanälen 12, die jeweils an eines der Mikroventile 5 angeschlossen sind und andererseits gemeinsam mit einem Speise-Hauptkanal 12' verbunden sein können, der den Grundkörper 4 durchzieht. Über eine Anschlußöffnung 27 an der Außenfläche des Grundkörpers 4 ist der Speise-Hauptkanal 12' an eine geeignete Druckquelle P angeschlossen.

Des weiteren ist jedes Mikroventil 5 an einen Entlüftungskanal 13 angeschlossen, wobei alle Entlüftungskanäle 13 gemeinsam in einen Entlüftungs-Hauptkanal 13' münden, der den Grundkörper 4 parallel zum Speise-Hauptkanal 12' durchsetzt und mit einer Öffnung 28 zur Außenfläche des Grundkörpers 4 ausmündet, wo ein Anschluß zu einer Drucksenke R, beispielsweise eine Verbindung zur Atmosphäre, erfolgt.

Schließlich ist eine der Anzahl der Mikroventile 5 entsprechende Anzahl von Arbeitskanälen 14 vorgesehen, die jeweils mit einem der Mikroventile 5 verbunden sind und andererseits zu einer jeweils eigenen Anschlußöffnung 29 an der Außenfläche des Grundkörpers 4 führen, wo Anschlußmöglichkeiten vorgesehen sind, um einen Verbraucher A₁, A₂ ... A₈ anzuschließen. Ein Verbindungskanal 14' stellt überdies eine Fluidverbindung sämtlicher Arbeitskanäle 14 her. Er verläuft beim Ausführungsbeispiel parallel zum Speise-Hauptkanal 12' und zum Entlüftungs-Hauptkanal 13'.

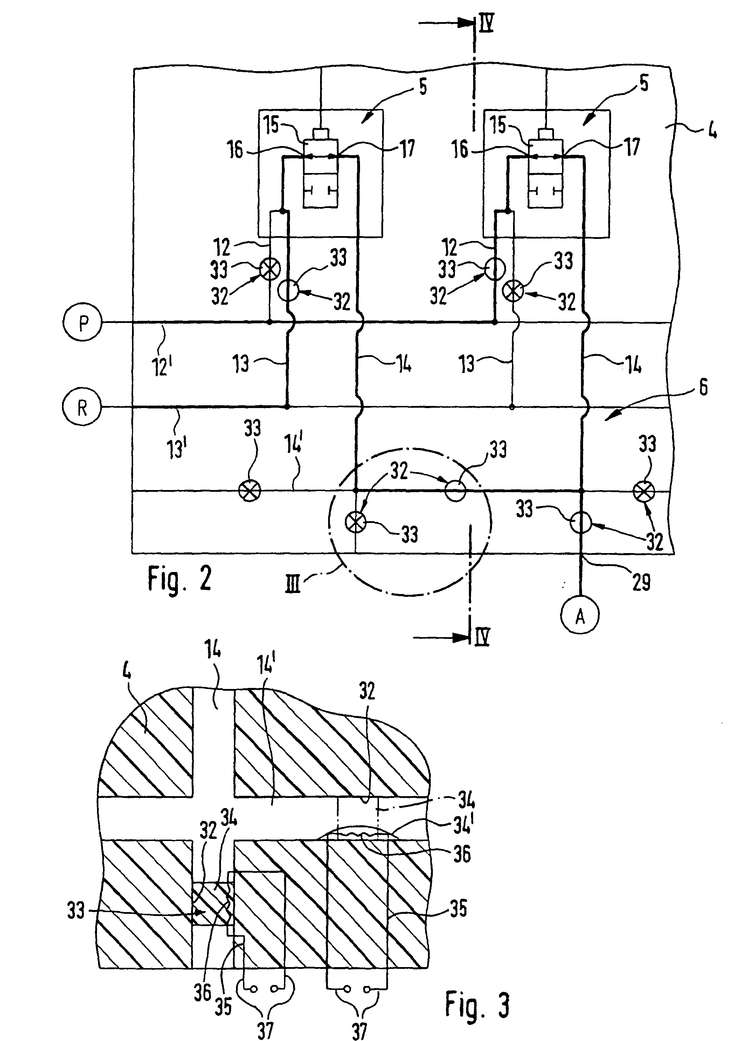

Um das Fluidkanalsystem 6 an die gewünschte Funktionalität der Funktionsgruppen 26 anzupassen, werden seine Fluidkanäle 12, 13, 14 - also einschließlich Speise-Hauptkanal 12', Entlüftungs-Hauptkanal 13' und Verbindungskanal 14' - durch Freigeben und/oder Verschließen von Durchgängen 32 (vgl. Fig. 3 und 4) individuell verschaltet.

Die Verschaltung erfolgt beim Ausführungsbeispiel unter Verwendung geeigneter Absperrmittel 33, die an den Stellen des Fluidkanalsystems 6 plaziert sind, an denen sich die Durchgänge 32 befinden. In Fig. 2 sind die Absperrmittel 33 durch in den Kanalverlauf eingezeichnete Kreise markiert.

Es kann nun beispielsweise vorgesehen sein, daß die Absperrrmittel 33 in der Standardanordnung des Fluidkanalsystems 6 alle steuerbaren Durchgänge 32 freigeben. Bei der in Fig. 3 und 4 gezeigten bevorzugten Bauform ist jedoch vorgesehen, daß die Fluiddurchgänge 32 in der Standardanordnung verschlossen sind, wobei als Absperrmittel 33 im betreffenden Fluidkanal 32, 33, 34 an der Stelle des eventuell freizugebenden Durchganges 32 plazierte Trennwände 34 vorgesehen sind. Bei den Trennwänden 34 kann es sich um einstückige Bestandteile des Grundkörpers 4 bzw. der Schichtelemente 8 handeln. Standardmäßig sind somit die Fluidkanäle 12, 13, 14 des Fluidkanalsystems 6 an geeignet vorbestimmten Stellen voneinander abgetrennt, und es wird nur dann ein Durchgang 32 freigegeben, wenn dies in Abstimmung mit der vorgegebenen elektrischen Ventilverknüpfung erforderlich ist.

In Fig. 2 sind die einen Durchgang versperrenden Absperrmittel 33 mit einem Kreuz markiert. Die übrigen Absperrmittel 33 geben einen Durchgang frei. Auf diese Weise ist insgesamt eine Kanalverschaltung realisiert, die bei der in Fig. 2 gezeigten, sich aus zwei 2/2-Mikroventilen zusammengesetzten Funktionsgruppe 26 insgesamt eine 3/2-Schaltfunktion zur Folge hat. Man hat also ausgehend von zwei Mikroventilen 5 mit einer niederwertigeren Schaltfunktion eine höherwertige Schaltfunktion realisiert, wobei unter Einschaltung weiterer Mikroventile 5 in die Funktionsgruppe 26 noch komplexere Ventilfunktionen realisierbar wären, beispielsweise eine 4/2- oder eine 5/3-Schaltfunktion.

In vergleichbarer Weise wäre es denkbar, die Verknüpfung der Fluidkanäle 12, 13, 14 dergestalt vorzunehmen, daß sich eine Parallelschaltung von zwei oder noch mehr Mikroventilen 5 zum Zwecke einer Vergrößerung des zur Verfügung gestellten Strömungsquerschnittes ergibt.

Somit besteht insgesamt die Möglichkeit, ausgehend von der Fertigung gleichartiger batterieähnlicher Mikroventilsysteme durch anwendungsspezifische Programmierung der elektronischen Steuerseite wie auch der fluidischen Verschaltungsseite eine individuelle Ventilfunktionalität zur Verfügung zu stellen, wobei ausgehend vom gleichartigen Aufbau und somit unter Rückgriff auf standardisierte Herstellungsverfahren sehr flexibel den verschiedenartigsten Einsatzfällen Rechnung getragen werden kann.

In Fig. 3 und 4 ist exemplarisch eine mögliche Ausgestaltung von Absperrmitteln 33 gezeigt. Sie sind so ausgestaltet, daß sie normalerweise, im unbetätigten Zustand, den Verschluß eines Durchganges 32 zwischen zwei Fluidkanälen hervorrufen. Durch Betätigung bzw. Aktivierung wird der jeweils zugeordnete Durchgang 32 freigegeben. Sie sind von Trennwänden 34 gebildet, denen Betätigungsmittel 35 zugeordnet sind, bei deren Aktivierung sie durch Energiezufuhr thermisch entfernt werden können.

Die beim Ausführungsbeispiel einer jeweiligen Trennwand 34 zugeordneten Betätigungsmittel 35 enthalten ein in der Trennwand 34 verlaufendes, insbesondere drahtartiges Heizelement 36, das über zur Außenseite des Grundkörpers 4 geführte Leiter 37 an eine Spannungsquelle angeschlossen werden kann, so daß durch Hitzeeinwirkung ein Schmelzen und/oder Verdampfen der Trennwand 34 hervorgerufen wird. In Fig. 3 und 4 sind bei 34' geschmolzene Trennwände 34 angedeutet, die einen Fluiddurchgang freigeben.

Während bei den beispielsgemäßen Absperrmitteln 33 im Rahmen der Programmierung bzw. Verschaltung die für die entsprechende Funktion erforderlichen fluidischen Verbindungen geöffnet werden, kann bei einer alternativen Ausführungsform auch vorgesehen werden, daß ausgehend von freigegebenen Durchgängen für den speziellen Anwendungsfall nicht benötigte fluidische Verbindungen beim Programmieren der Anordnung verschlossen werden. Dies könnte beispielsweise dadurch geschehen, daß in der betreffenden Stelle ein pfropfenartiges Hindernis plaziert wird oder daß wiederum durch thermische Energie ein Schmelzvorgang erzeugt wird, der durch eine Art Schweißverbindung den zugeordneten Durchgang verschließt.

Denkbar wäre es auch, die Absperrmittel 33 in Gestalt mikromechanischer Schaltventile auszuführen, beispielsweise der Art, wie sie anhand der Mikroventile 5 beschrieben sind. Auf diese Weise läßt sich verhältnismäßig einfach auch eine reversible Verschaltungsmöglichkeit realisieren, die im Anschluß an eine im Rahmen einer Programmierung erfolgende Freigabe eines Durchganges bei Bedarf einen erneuten Verschluß zuläßt, oder umgekehrt.

Greift man für die Absperrmittel auf Ventile zurück, können insbesondere auch Bauformen zum Einsatz gelangen, die auf einem piezoelektrischen und/oder magnetostriktiven Funktionsprinzip basieren. Auch Ventile, bei deren Betätigung man sich die Eigenschaften des sogenannten Memorymetalls zunutze macht, könnten Verwendung finden. Diese Aufzählung ist selbstverständlich nicht abschließend.

Es ist des weiteren vorteilhaft, wenn eine externe Verschaltungseinrichtung 38 zum Programmieren der Fluidverbindungen vorgesehen ist, wie sie in Fig. 4 strichpunktiert schematisch und exemplarisch angedeutet ist. Die dortige Verschaltungseinrichtung 38 ist ein Programmiergerät. Es läßt sich beispielsweise an die zu den Heizelementen 36 führenden Leiter 37 anschließen und ermöglicht zweckmäßigerweise eine gleichzeitige Herstellung sämtlicher gewünschter Fluidkanalverschaltungen, beispielsweise durch Anlegen entsprechender Spannungen oder durch Übermittlung sonstiger Signale. Durch flexible Programmierung der Verschaltungseinrichtung 38 kann problemlos dem gewünschten Anwendungsfall Rechnung getragen werden.

Bei einer nicht näher dargestellten Ausführungsform der Verschaltungseinrichtung 38 ist eine Art Nadelkissen vorgesehen, das in den Grundkörper 4 eingedrückt werden kann und dessen Nadeln beheizbar sind, so daß an der Stelle der eingedrückten Nadeln ein Schmelzvorgang zum Verschließen und/oder Freigeben von Kanaldurchgängen hervorgerufen werden kann. Auch hier ist vorzugsweise eine flexibel programmierbare Ausführungsform möglich, beispielsweise derart, daß die einzelnen Nadeln an einem Nadelträger angeordnet sind und sich bezüglich diesem in einer eingefahrenen und einer ausgefahrenen Stellung positionieren lassen, wobei nur diejenigen in die ausgefahrene Stellung verbracht werden, die in den Grundkörper 4 eingeführt werden sollen.

Es wäre auch denkbar, mit verlorenen Nadeln zu arbeiten, derart, daß die Nadeln, vorzugsweise unter Wärmezufuhr, in den Grundkörper 4 eingedrückt werden und dort als Absperrmittel im Bereich der zu verschließenden Durchgänge 32 verbleiben.

Es versteht sich, daß auch noch andere geeignete Mittel zur Vornahme der gewünschten fluidischen Verschaltung eingesetzt werden können. Möglich wäre auch eine ferngesteuerte, insbesondere drahtlose Betätigung der Absperrmittel.

Es sei ferner nochmals darauf hingewiesen, daß die Anzahl der pro Mikroventilbatterie vorgesehenen Mikroventile 5 im Prinzip beliebig ist und durchaus auch in einer Größenordnung von 100 Stück vorgesehen werden kann. Durch geeignete Batch-Fertigungsverfahren, wie sie aus der Mikrotechnik bekannt sind, lassen sich die erforderlichen Strukturen auf kostengünstige Weise herstellen.

Bei einer weiteren, in der Zeichnung nicht näher dargestellten Ausführungsform enthält die Mikroventilbatterie zusätzlich zu den beschriebenen Bestandteilen eine Mehrzahl von Sensoren. Diese Sensoren sind in standardisierter Verteilung angeordnet und können durch Freigeben und/oder Verschließen von Durchgängen individuell mit den Fluidkanälen 12, 12'; 13, 13'; 14, 14' verschaltet werden. Das Freigeben und/oder Verschließen der Durchgänge kann in einer Art und Weise realisiert werden, wie sie auch innerhalb des Fluidkanalsystems bezüglich der Fluidkanäle zur Anwendung gelangt. Somit ist es möglich, einen oder mehrere Sensoren nach Bedarf mit einem oder mehreren Fluidkanälen zu verbinden, um dem betreffenden Fluidkanal zugeordnete Zustandsgrößen zu erfassen. Die Sensoren können beispielsweise zur Messung des herrschenden Druckes oder des Durchflusses eingesetzt werden.

Die Sensoren sind ferner vergleichbar den einzelnen Mikroventilen elektrisch mit der Funktionsvorgabeeinheit 7 gekoppelt und in der Lage, Sensorsignale an diese Funktionsvorgabeeinheit zu übermitteln. Auf diese Weise kann die Ansteuerung der Mikroventile in Abhängigkeit von den in einem oder mehreren der Fluidkanäle herrschenden und erfaßten Gegebenheiten erfolgen. Man kann auf diese Weise sehr einfach Regelungs- und Anzeigevorgänge durchführen, ohne auf zusätzliche externe Bauteile angewiesen zu sein. Durch die integrierte Sensorik erübrigen sich außerdem umfangreiche Anschlußmaßnahmen, und es läßt sich eine kompakte Bauweise realisieren. Dabei ist es möglich, die Sensoren in die gegebenenfalls vorhandenen Schichtelemente 8 zu integrieren. Bei Bedarf können sämtliche Sensoren in einem gemeinsamen Schichtelement untergebracht werden.

## Patentansprüche

1. Mikroventilbatterie, mit einer Mehrzahl von zu einer Baueinheit zusammengefaßten, durch Mikrostrukturierungsverfahren hergestellten Mikroventilen (5), mit einer elektronischen Steuereinrichtung (7) zur Aktuierung der Mikroventile (5), die mindestens eine Funktionsvorgabeeinheit (23) zur programmierbaren gruppenweisen funktionellen Verknüpfung der Mikroventile (5) enthält, wobei in der elektronischen Steuereinrichtung (7) aus zugeführten oder in einem internen Steuerprogramm erzeugten Steuersignalen und aus in der Funktionsvorgabeeinheit (23) abgespeicherten zugeordneten Funktionsverknüpfungsparametern ventilspezifische Betätigungssignale für die angesprochenen Mikroventile (5) erzeugt werden, und mit einem an die Mikroventile (5) angeschlossenen Fluidkanalsystem (6), dessen Fluidkanäle (12, 12'; 13, 13'; 14, 14') ausgehend von einer standardisiert vorgegebenen Anordnung in Abhängigkeit von der mit der Funktionsvorgabeeinheit (23) vorgegebenen funktionellen Ventilverküpfung durch Freigeben und/oder Verschließen von Durchgängen (32) individuell verschaltet sind.

2. Mikroventilbatterie nach Anspruch 1, **dadurch gekennzeichnet, daß** allen Mikroventilen (5) gemeinsam eine einzige Funktionsvorgabeeinheit (23) zugeordnet ist.

3. Mikroventilbatterie nach Anspruch 1 oder 2, **dadurch gekennzeichnet, daß** die Mikroventile (5) alle vom gleichen Typ sind.

4. Mikroventilbatterie nach einem der Ansprüche 1 bis 3, **dadurch gekennzeichnet, daß** ein oder mehrere Mikroventile vom Typ 2/2-Schaltventil sind.

5. Mikroventilbatterie nach einem der Ansprüche 1 bis 4, **dadurch gekennzeichnet, daß** die mindestens eine Funktionsvorgabeeinheit (23) eine Verknüpfung von Mikroventilen (5) zu einer oberhalb einer 2/2-Schaltfunktion liegenden höherwertigen Schaltfunktion ermöglicht, beispielsweise zu einer 3/2- oder 4/2-Schaltfunktion.

6. Mikroventilbatterie nach einem der Ansprüche 1 bis 5, **dadurch gekennzeichnet, daß** die mindestens eine Funktionsvorgabeeinheit (23) eine Verknüpfung von Mikroventilen (5) im Sinne einer Parallelschaltung zum Zwecke einer Vergrößerung der zur Verfügung gestellten Strömungsquerschnitte ermöglicht.

7. Mikroventilbatterie nach einem der Ansprüche 1 bis 6, **dadurch gekennzeichnet, daß** die elektronische Steuereinrichtung (7) so ausgeführt ist, daß sie den Anschluß eines mit einer separaten Steuervorrichtung (3) kommunizierenden Busses (2), beispielsweise eines ASI-Busses, ermöglicht.

8. Mikroventilbatterie nach Anspruch 7, **dadurch gekennzeichnet, daß** die elektronische Steuereinrichtung (7) einen Busknoten (24) enthält, der zum Empfang serieller Steuersignale ausgelegt ist.

9. Mikroventilbatterie nach einem der Ansprüche 1 bis 8, **dadurch gekennzeichnet, daß** mindestens eine Funktionsvorgabeeinheit (23) reversibel programmierbar ausgebildet ist.

10. Mikroventilbatterie nach einem der Ansprüche 1 bis 9, **dadurch gekennzeichnet, daß** die elektronische Steuereinrichtung (7) so ausgeführt ist, daß die Programmierung der mindestens einen Funktionsvorgabeeinheit (23) von externer Stelle aus durchführbar ist, beispielsweise über einen angeschlossenen Bus (2) oder drahtlos ferngesteuert.

11. Mikroventilbatterie nach einem der Ansprüche 1 bis 10, **gekennzeichnet durch** einen eine Mehrzahl aufeinanderliegender Schichtelemente (8) enthaltenden Schichtkörper, der die Mikroventile (5) und das Fluidkanalsystem (6), beide **durch** Mikrostrukturierungsverfahren erzeugt, enthält .

12. Mikroventilbatterie nach einem der Ansprüche 1 bis 11, **dadurch gekennzeichnet, daß** das Fluidkanalsystem (6) an vorgegebenen Stellen über Absperrmittel (33) verfügt, deren Betätigung an der betreffenden Stelle eine Freigabe oder einen Verschluß eines Durchganges (32) zwischen Fluidkanälen hervorruft.

13. Mikroventilbatterie nach Anspruch 12, **dadurch gekennzeichnet, daß** die Absperrmittel (33) wenigstens teilweise von zum Beispiel durch Schmelzen oder Verdampfen thermisch entfernbaren Trennwänden (34) gebildet sind.

14. Mikroventilbatterie nach Anspruch 12 oder 13, **dadurch gekennzeichnet, daß** die Absperrmittel (33) wenigstens teilweise von Mikroventilen gebildet sind.

15. Mikroventilbatterie nach einem der Ansprüche 12 bis 14, **dadurch gekennzeichnet, daß** die Absperrmittel (33) wenigstens teilweise von Ventilen gebildet sind, die auf magnetostriktivem und/oder piezoelektrischem Funktionsprinzip und/oder auf einem Memorymetall-Funktionsprinzip basieren.

16. Mikroventilbatterie nach einem der Ansprüche 12 bis 15, **dadurch gekennzeichnet, daß** die Absperrmittel (28) ferngesteuert betätigbar sind, insbesondere drahtlos.

17. Mikroventilbatterie nach einem der Ansprüche 1 bis 16, **dadurch gekennzeichnet, daß** eine Mehrzahl von Sensoren - beispielsweise für Druck- oder Durchflußmessungen - in standardisierter Verteilung vorhanden ist, die einerseits mit der Funktionsvorgabeeinheit (23) verbunden sind und andererseits durch Freigeben und/oder Verschließen von Durchgängen individuell mit den Fluidkanälen (12, 12'; 13, 13'; 14, 14') verschaltbar sind und deren Sensorsignale in der Funktionsvorgabeeinheit (23) zum Beispiel für Regel- oder Anzeigezwecke verarbeitet werden.

## Claims

1. A microvalve battery, comprising a plurality of microvalves (5) manufactured by microstructuring processes and combined into a module, and an electronic control device (7) for actuating the microvalves (5), which contains at least one function-presetting unit (23) for the programmable functional connection of the microvalves (5) into groups, valve-specific actuating signals for the microvalves (5) actuated being generated in the electronic control device (7) from control signals supplied thereto or produced in an internal control program, and from assigned function-connecting parameters stored in the function-presetting unit (23), and comprising a fluid channel system (6) connected to the microvalves (5), the fluid channels (12, 12'; 13, 13'; 14, 14') of which, starting from a standardised, preset arrangement, are individually interconnected by the opening and/or closing of passages (32), depending on the functional valve combination preset by means of the function-presetting unit (23).

2. Microvalve battery according to Claim 1, **characterised in that** a single function-presetting unit (23) is jointly associated with all the microvalves (5).

3. Microvalve battery according to Claim 1 or 2, **characterised in that** all the microvalves (5) are of the same type.

4. Microvalve battery according to any one of claims 1 to 3, **characterised in that** one or more microvalves are of the 2/2 switching valve type.

5. Microvalve battery according to any one of claims 1 to 4, **characterised in that** the at least one function-presetting unit (23) makes possible a linking of microvalves (5) to provide a switching function higher than a 2/2 switching function, for example, a 3/2 or 4/2 switching function.

6. Microvalve battery according to any one of claims 1 to 5, **characterised in that** the at least one function-presetting unit (23) makes possible a linking of microvalves (5) to form a parallel circuit for the purpose of increasing the available flow cross-sections.

7. Microvalve battery according to any one of claims 1 to 6, **characterised in that** the electronic control device (7) is so constructed that it makes possible a connection to a bus (2), for example, an ASI bus, communicating with a separate control device (3).

8. Microvalve battery according to Claim 7, **characterised in that** the electronic control device (7) contains a bus node (24) designed to receive serial control signals.

9. Microvalve battery according to any one of claims 1 to 8, **characterised in that** at least one function-presetting unit (23) is configured to be reversibly programmable.

10. Microvalve battery according to any one of claims 1 to 9, **characterised in that** the electronic control device (7) is so configured that the programming of the at least one function-presetting unit (23) can be carried out from an external location, for example, via a connected bus (2) or wirelessly.

11. Microvalve battery according to any one of claims 1 to 10, **characterised by** a layer body containing a plurality of stacked layer elements (8), which layer body contains the microvalves (5) and the fluid channel system (6), both being produced by microstructuring processes.

12. Microvalve battery according to any one of claims 1 to 11, **characterised in that** the fluid channel system (6) has blocking means (33) at predefined positions, actuation of which at the position concerned causes opening or closing of a passage (32) between fluid channels.

13. Microvalve battery according to Claim 12, **characterised in that** the blocking means (33) are formed at least in part by dividing walls (34) which are thermally removable, for example, by melting or vaporising.

14. Microvalve battery according to Claim 12 or 13, **characterised in that** the blocking means (33) are formed at least in part by microvalves.

15. Microvalve battery according to any one of claims 12 to 14, **characterised in that** the blocking means (33) are formed at least in part by valves based on a magnetostrictive and/or a piezoelectric and/or a memory-metal functional principle.

16. Microvalve battery according to any one of claims 12 to 15, **characterised in that** the blocking means (28) can be actuated by remote control, in particular wirelessly.

17. Microvalve battery according to any one of claims 1 to 16, **characterised in that** a plurality of sensors - for example, for pressure or flow measurement - are present in a standardised distribution, which sensors are on the one hand connected to the function-presetting unit (23) and on the other are individually connectable to the fluid channels (12, 12'; 13, 13'; 14, 14') by the opening and/or closing of passages, and the signals of which sensors are processed in the function-presetting unit (23), for example, for control or display purposes.

## Revendications

1. Batterie de micro-soupapes comportant une pluralité de micro-soupapes (5) fabriquées par un procédé de micro-structuration, réunies en une unité de construction, comportant un dispositif électronique de commande (7) pour l'actionnement des micro-soupapes (5), qui contient au moins une unité de sélection de fonction (23) pour la liaison fonctionnelle programmable des soupapes (5) par groupes, des signaux d'actionnement spécifiques des soupapes pour les micro-soupapes (5) sollicitées étant produits dans le dispositif électronique de commande (7) à partir de signaux de commande amenés ou produits dans un programme de commande interne, et à partir de paramètres de liaisons fonctionnelles associés mémorisés dans l'unité de sélection de fonction (23), et comportant une système de canaux de fluide (6) raccordé aux micro-soupapes (5) dont les canaux de fluide (12, 12' ; 13, 13' ; 14, 14'), partant d'une disposition prédéfinie de manière standardisée, sont commandés individuellement par ouverture et/ou fermeture de passages (32), en fonction de la liaison fonctionnelle des soupapes prédéfinie par l'unité de sélection de fonction (23).

2. Batterie de micro-soupapes selon la revendication 1, **caractérisée en ce qu'**une seule unité de sélection de fonction (23) est associée à l'ensemble de toutes les micro-soupapes (5).

3. Batterie de micro-soupapes selon la revendication 1 ou 2, **caractérisée en ce que** les micro-soupapes (5) sont toutes de même type.

4. Batterie de micro-soupapes selon l'une des revendications 1 à 3, **caractérisée en ce qu'**une ou plusieurs micro-soupapes sont du type soupape de commande à 2/2 voies.

5. Batterie de micro-soupapes selon l'une des revendications 1 à 4, **caractérisée en ce que** la ou les unités de sélection de fonction (23) permettent une liaison de micro-soupapes (5) en une fonction de commande de valeur supérieure à une fonction à 2/2 voies, par exemple en une fonction de commande à 3/2 voies ou à 4/2 voies.

6. Batterie de micro-soupapes selon l'une des revendications 1 à 5, **caractérisée en ce que** la ou les unités de sélection de fonction (23) permettent une liaison de micro-soupapes (5) au sens d'un circuit en parallèle afin d'augmenter les sections d'écoulement disponibles.

7. Batterie de micro-soupapes selon l'une des revendications 1 à 6, **caractérisée en ce que** le dispositif électronique de commande (7) est réalisé de manière à permettre le raccordement d'un bus (2), par exemple d'un bus ASI, communiquant avec un dispositif de commande (3) séparé.

8. Batterie de micro-soupapes selon la revendication 7, **caractérisée en ce que** le dispositif électronique de commande (7) contient un noeud de bus (24) qui est conçu pour recevoir des signaux de commande série.

9. Batterie de micro-soupapes selon l'une des revendications 1 à 8, **caractérisée en ce qu'**au moins une unité de sélection de fonction (23) est réalisée programmable de manière réversible.

10. Batterie de micro-soupapes selon l'une des revendications 1 à 9, **caractérisée en ce que** le dispositif électronique de commande (7) est réalisé de manière que la programmation de la ou des unités de sélection de fonction (23) puisse être exécutée depuis un emplacement extérieur, par exemple de façon télécommandée par l'intermédiaire d'un bus (2) raccordé ou sans fil.

11. Batterie de micro-soupapes selon l'une des revendications 1 à 10, **caractérisée par** un corps stratifié contenant une pluralité d'éléments en couches (8) superposés qui contient les micro-soupapes (5) et le système de canaux de fluide (6), produits tous deux par un procédé de micro-structuration.

12. Batterie de micro-soupapes selon l'une des revendications 1 à 11, **caractérisée en ce que** le système de canaux de fluide (6) dispose, en des emplacements prédéfinis, de moyens d'arrêt (33) dont l'actionnement à l'emplacement concerné provoque une ouverture ou une fermeture d'un passage (32) entre des canaux de fluide.

13. Batterie de micro-soupapes selon la revendication 12, **caractérisée en ce que** les moyens d'arrêt (33) sont formés au moins en partie par des cloisons (34) pouvant être éliminées thermiquement par exemple par fusion ou vaporisation.

14. Batterie de micro-soupapes selon la revendication 12 ou 13, **caractérisée en ce que** les moyens d'arrêt (33) sont formés au moins en partie par des micro-soupapes.

15. Batterie de micro-soupapes selon l'une des revendications 12 à 14, **caractérisée en ce que** les moyens d'arrêt (33) sont formés au moins en partie par des soupapes qui se fondent sur un principe de fonctionnement magnétostrictif et/ou piézoélectrique, et/ou sur un principe de fonctionnement à métal à mémoire.

16. Batterie de micro-soupapes selon l'une des revendications 12 à 15, **caractérisée en ce que** les moyens d'arrêt (28) peuvent être actionnés de manière télécommandée, en particulier sans fil.

17. Batterie de micro-soupapes selon l'une des revendications 1 à 16, **caractérisée en ce qu'**il est prévu une pluralité de capteurs - par exemple pour des mesures de la pression ou du débit - dans une distribution standardisée, qui sont reliés d'une part à l'unité de sélection de fonction (23) et qui peuvent être couplés d'autre part individuellement aux canaux de fluide (12, 12' ; 13, 13' ; 14, 14') par ouverture et/ou fermeture de passages, et dont les signaux sont traités dans l'unité de sélection de fonction (23) par exemple à des fins de régulation ou d'affichage.
